# EUROPEAN PATENT APPLICATION

(11) **EP 1 055 907 A2**
(43) Date of publication of application: **29.11.2000**
(21) Application number: 00110432.2
(22) Date of filing: 16.05.2000
(51) Int. Cl.: G01C 3/08

(54) **Rangefinder**

(30) Priority: 17.05.1999 JP 13592699; 01.06.1999 JP 15403099
(71) Applicant: JASCO CORPORATION, Hachioji-shi Tokyo 192-8537 (JP); Japan Science and Technology Corporation, Kawaguchi-shi, Saitama 332-0012 (JP); KANAGAWA ACADEMY OF SCIENCE AND TECHNOLOGY, Kanagawa 213-0012 (JP)
(72) Inventor: Narita, Yoshihito, c/o Jasco Corporation, Tokyo 192-8537 (JP); Hisada, Hideho, c/o Jasco Corporation, Tokyo 192-8537 (JP); Ohtsu, Motoichi, Kanagawa Acad. of Science & Tech., Kanagawa 213-0012 (JP)
(74) Representative: Patentanwälte Lippert, Stachow, Schmidt & Partner

(57) **Abstract**

A rangefinder 10 comprises a light source 12 for emitting a luminous flux L1 having a predetermined beam diameter; interfering means 14 which is an object having an optical axis substantially perpendicular to a direction in which the object to be measured can be dislocated, the interfering means 14 having a transmission type diffraction grating 20 as one object for splitting the luminous flux L1 from the light source 12 into two diffraction luminous fluxes L2, L3 having respective directions different from each other, the two diffraction luminous fluxes L2, L3 being caused to impinge on a reflection type diffraction grating 22 as the other object, respective reflection luminous fluxes L2, L3 thereof being superposed on each other again by the transmission type diffraction grating 20 so as to interfere with each other; detecting means 16 for photoelectrically detecting interference light L4 obtained by the interfering means 14; and signal processing means 18 for measuring an intensity change and interference period of an interference signal obtained by the detecting means 16, and determining the dislocation of the object 22, 24 to be measured with reference to the reference object 20 from the intensity change and interference period of the interference signal.

## Description

This application claims the priorities of Japanese Patent Application No. 11-135926 filed on May 17, 1999 and Japanese Patent Application No. 11-154030 filed on June 1, 1999, which are incorporated herein by reference.

### FIELD OF THE INVENTION

The present invention relates to a rangefinder; and, in particular, to a rangefinder which can measure the dislocation of an object to be measured with reference to a reference object down to a minuter distance with a simple configuration.

### BACKGOUND OF THE INVENTION

For example, there have been known scanning microscopes such as atomic force microscopes which can measure the surface form of a sample by detecting an atomic force acting between the sample and a probe tip portion and scanning the surface of the sample such that thus detected value becomes constant.

There have also been known scanning microscopes such as near-field optical microscopes which can measure the surface form of a sample by scattering the near-field light localized near a minute object while scanning an optical probe, and producing a map of near-field light intensity.

Such a scanning microscope scans the sample surface by mounting the sample on a minutely movable stage such as XYZ stage and sequentially moving the stage by a predetermined amount.

For carrying out the scanning with a high accuracy, a high accuracy is needed for driving the stage. Namely, it is required for the stage to be movable by a predetermined amount as precisely as possible, whereby it is necessary to appropriately grasp the dislocation of the stage.

Employed for grasping the dislocation of the stage, for example, is a rangefinder for measuring the distance by which the stage is moved and its direction of movement.

Such a rangefinder is also required to have a measuring accuracy which is as high as the driving accuracy for the stage.

For measuring the dislocation of a moving object such as the stage, rangefinders which determine the dislocation of the moving object with reference to the wavelength of light have been known.

In thus configured conventional rangefinders, monochromatic light (λ) from a monochromatic light source is split by a beam splitter of an interferometer, and the resulting beams are inputted, for example, into a fixed mirror as a reference object and a scanning mirror as an object to be measured. Then, two reflected light beams from the fixed mirror and scanning mirror are superposed on each other again by the beam splitter

Since these two reflected light beams generate a phase difference therebetween due to the difference between their respective optical path lengths, interference fringes occur when the beams are superposed on each other. These interference fringes are photoelectrically detected by detecting means.

Here, as the scanning mirror moves in the optical axis direction, bright and dark parts of the interference fringes periodically change upon every 2/λ movement. By counting this change in brightness and darkness, the dislocation of the scanning mirror is determined.

Namely, it has been a common practice to measure the AC signal among the interference fringe intensity signals obtained by the detection means and then determine the dislocation of the moving object such as the stage provided with the scanning minor from the change in interference wavelength.

When the dislocation of the moving object is measured with reference to the wavelength of light as in the conventionally configured rangefinders, however, interference waves with a distance not greater than the half of the wavelength of the light would not occur. Namely, since the periodic change of brightness and darkness in interference fringes can be obtained only upon every 2/λ movement, it has been impossible to measure the distance of movement not longer than the wavelength of light.

Therefore, it has been quite difficult to measure the dislocation with a high accuracy, in particular, in an object which moves by a minute distance such as a moving object like a minutely movable stage which is employed in scanning microscopes, for example, such as atomic force microscopes and near-field optical microscopes.

Though there has been a strong demand for development of techniques capable of highly accurate measurement down to a minuter distance with a simple configuration in the field of minute distance measurement in particular, no techniques which can fulfill this demand has been known yet.

Also, one set of light source and detector has been able to measure only uniaxial dislocation.

### SUMMARY OF THE INVENTION

In view of the above-mentioned problems of the conventional techniques, it is an object of the present invention to provide a rangefinder which can measure the dislocation of an object to be measured with a high accuracy down to a minuter distance in a simple configuration.

For achieving this object, the rangefinder in accordance with the present invention is a rangefinder for measuring a dislocation of an object to be measured with reference to a reference object, the rangefinder comprising a light source, interfering means, detecting means, and signal processing means.

Here, the light source emits a luminous flux having a predetermined beam diameter.

The interfering means is an object having an optical axis substantially perpendicular to a direction in which the object to be measured can be dislocated. In the interfering means, a transmission type diffraction grating as one object splits light from the light source into two diffraction luminous fluxes having respective directions different from each other, the two diffraction luminous fluxes are caused to impinge on a reflection type diffraction grating as the other object, and respective reflection luminous fluxes thereof are superposed on each other again by the transmission type diffraction grating so as to interfere with each other.

The detection means photoelectrically detects interference light obtained by the interfering means.

The signal processing means measures an intensity change and interference period of an interference signal obtained by the detecting means, and obtains the dislocation of the object to be measured with reference to the reference object from the intensity change and interference period of the interference signal.

It is preferred in the present invention that, for measuring the intensity change and interference period of the interference signal, the signal processing means interpolate with a line the intensity change of a DC signal of the interference signal obtained by the detecting means while inserting a scale based on an AC signal which is an interference component and determine the dislocation of the object to be measured with reference to the reference object according to the scale and the DC-like information.

It is preferred in the present invention that the diffraction grating have one grating surface divided into a plurality of grating faces with lines engraved in respective dislocating directions of the object to be measured; and that the rangefinder emit one light beam from the light source such that the beam diameter thereof extends across the grating faces, and measure respective dislocation components in the line directions with reference to the reference object.

Here, dividing one grating surface into a plurality of grating faces with lines engraved in respective dislocating directions of the object to be measured refers to states where the respective directions of grooves of grating faces arranged adjacent each other on one surface are different from each other by 90 degrees, for example, and the like.

It is preferred in the present invention that the object to be measured be movable in its optical axis direction as well, and that the signal processing means measure the intensity change and interference period of the interference signal obtained by the detecting means and determine a dislocation component of the object to be measured in the optical axis direction from the intensity change and interference period of the interference signal.

In another aspect, for achieving the above-mentioned object, the rangefinder in accordance with the present invention is a rangefider for measuring a dislocation of an object to be measured, the rangefinder comprising a light source, light-transmitting and receiving means, detecting means, and signal processing means.

Here, the light source emits a luminous flux having a predetermined beam diameter.

The light-transmitting and receiving means sends out light from the light source from an exit end of the one object to a reflecting object as the other object, receives the light reflected by the reflecting object, and superposes the light reflected by the reflecting object and light reflected by the exit end of the one object onto each other so as to cause interference therebetween.

The detecting means photoelectrically detects an intensity signal of interference light obtained by the light-transmitting and receiving means.

The signal processing means measures an intensity change and interference period of an interference signal obtained by the detecting means, and determines the dislocation of the object to be measured with reference to the reference object from the intensity change and interference period of the interference signal.

It is preferred in the present invention that, for measuring the intensity change and interference period of the interference signal, the signal processing means interpolate with a line the intensity change of a DC signal of the interference signal obtained by the detecting means while inserting a scale based on an AC signal which is an interference component and determine the dislocation of the object to be measured with reference to the reference object according to the scale and the DC-like information.

It is preferred in the present invention that the light source emit coherent monochromatic light.

In the rangefinder of the present invention, one light beam from the light source is turned into two diffraction luminous fluxes whose directions have been altered by the interfering means, and the two diffraction luminous fluxes are superposed on each other so as to interfere with each other. Thus obtained interference light is photoelectrically detected by the detecting means, an intensity change and interference period of thus detected interference signal are measured by the signal processing means, and the dislocation of the object to be measured is determined from the intensity change and interference period with reference to the sample object.

As a result, in the rangefinder of the present invention, there is no restriction with respect to the wavelength of light for measuring the dislocation, whereas the period of interference signal is determined by intervals of grooves of a diffraction grating. Therefore, by making the groove intervals of the diffraction grating minuter, the rangefinder of the present invention can even measure with a higher accuracy a minute amount of dislocation not greater than the wavelength of light employed for dislocation measurement, which has been quite difficult with the conventional rangefinders based on the wavelength of light.

Also, since the rangefinder of the present invention has no restriction concerning the wavelength of light employed for dislocation measurement, light-emitting diodes and the like, which are less expensive than laser diodes and the like used as typical monochromatic light sources, can be employed as the light source. As a consequence, the apparatus can be made at a lower cost.

In the rangefinder of the present invention, the intensity change of the DC signal of the interference signal obtained by the detecting means is interpolated by the signal processing means with a line while a scale based on an AC signal, which is an interference component, is inserted therein at a predetermined interval of period, for example, on the order of the wavelength, and the dislocation is determined from the scale as the interference period and the DC-like information as the intensity change of the interference signal.

As a result, by inserting the scale on the order of the wavelength due to the interference signal, the rangefinder of the present invention can accurately correct the dislocation. Namely, it can accurately carry out the linear interpolation.

Therefore, as compared with the case where there are no such contrivances, the measurement of dislocation can be carried out with a higher accuracy

Also, in the rangefinder of the present invention, one grating surface of a diffraction grating is divided into a plurality of grating faces, grooves of the respective grating faces are engraved in respective dislocating directions orthogonal to each other, for example, of the object to be measured, and one light beam is emitted from, the light source such that the beam diameter thereof extends across the grating faces. Therefore, it becomes possible for a single rangefinder to simultaneously measure a plurality of dislocating directions orthogonal to each other, for example, which has conventionally been quite difficult.

Hence, as compared with the case where a rangefinder is provided for each dislocating direction of the object to be measured, the configuration can be made simpler in the rangefinder of the present invention. Consequently, the apparatus can be made smaller at a lower cost.

Also, the rangefinder of the present invention superposes the light reflected by the reflecting object and the light reflected by the light-transmitting and receiving means onto each other so as to cause interference therebetween. Thus obtained interference light is photoelectrically detected by the detecting means, the intensity change of the DC signal of the interference signal obtained by the detecting means is interpolated by the signal processing means with a line while a scale based on an AC signal, which is an interference component, is inserted therein at a predetermined interval of period, for example, on the order of the wavelength, and the dislocation between the light-transmitting and receiving means and the reflecting object is determined from the scale as the interference period and the DC-like information as the intensity change of the interference signal.

As a result, in the rangefinder of the present invention, the phase change of light is directly determined from the DC-like phase change of the electric signal without the aid of interference fringes, whereby it can even measure with a higher accuracy a change in relative distance not greater than the wavelength of light employed for dislocation measurement, which has been quite difficult with the conventional rangefinders based on the wavelength of light.

Also, by inserting the scale on the order of the wavelength due to the interference signal, the rangefinder of the present invention can accurately correct the dislocation. Namely, it can accurately carry out the linear interpolation such as the line interpolation mentioned above. Therefore, as compared with the case where there are no such contrivances, the measurement of dislocation can be carried out with a higher accuracy

### BRIEF DESCRIPTION OF THE DRAWINGS

Fig. 1 is an explanatory view of a schematic configuration of the rangefinder in accordance with a first embodiment of the present invention;
Fig. 2 is an explanatory view of a characteristic method of processing an interference signal in the rangefinder in accordance with embodiments of the present invention;
Fig. 3 is an explanatory view of characteristic interfering means in the rangefinder shown in Fig. 1;
Fig. 4 is an explanatory view of an arrangement of detecting means of the rangefinder shown in Fig. 1;
Fig. 5 is an explanatory view of a schematic configuration of the rangefinder in accordance with a second embodiment of the present invention; and
Fig. 6 is an explanatory view of occurrence of interference light in light-transmitting and receiving means in the rangefinder shown in Fig. 5.

### DETAILED DESCRIPTION OF THE PREFERRED EMBODIMENT

In the following, preferred embodiments of the present invention will be explained with reference to the drawings.

### First Embodiment

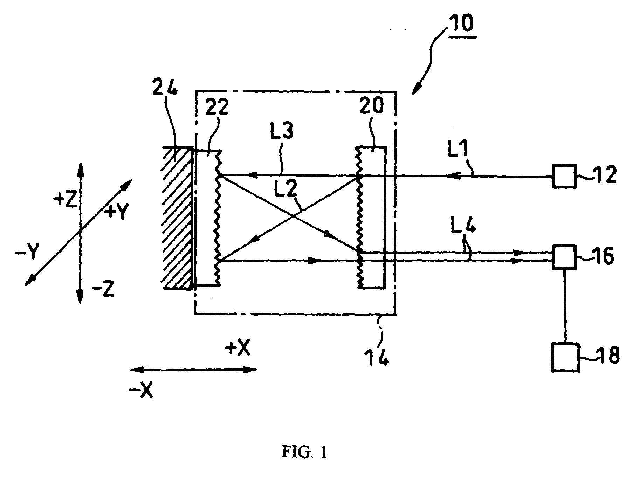

Fig. 1 shows a schematic configuration of the rangefinder in accordance with a first embodiment of the present invention.

The rangefinder 10 shown in this drawing includes a light source 12, interfering means 14 as a reference object and an object to be measured, detecting means 16, and signal processing means 18.

Here, the light source 12 comprises, for example, a laser diode (LD) which emits coherent monochromatic light desirably employed in the rangefinder, a light-emitting diode (LED) which is less expensive than the LD, or the like.

The light source 12 emits a luminous flux L1 having a predetermined beam diameter

The interfering means 14 includes a transmission type diffraction grating 20 as the reference object, and a reflection type diffraction grating 22 as the object to be measured.

The transmission type diffraction grating 20 has a grooved side facing the reflection type diffraction grating 22, and emits incident light such as the luminous flux L1 from the light source 12 and luminous fluxes L2, L3 from the reflection type diffraction grating 22 with or without diffraction. Namely, it carries out separation based on orders such as zero order and first order.

The reflection type diffraction grating 22 is disposed on a side wall of a moving object 24 such as a minutely movable stage of an atomic force microscope or near-field optical microscope, with its grooved side facing the transmission type diffraction grating 20.

As the moving object 24 such as the minutely movable stage moves, the reflection type diffraction grating 22 is movable in three directions of XYZ orthogonal to each other.

The transmission type diffraction grating 20 and reflection type diffraction grating 22 turn one luminous flux L1 from the light source 12 into two diffraction luminous fluxes L2, L3 having directions different from each other, and the transmission type diffraction grating 20 superposes the two luminous fluxes L2, L3 onto each other again so as to cause interference therebetween. Thus, interference light L4 is obtained.

For example, the luminous flux L1 from the light source 12 is initially split into the luminous flux L2 diffracted by the transmission type diffraction grating 20 and the luminous flux L3 transmitted through the transmission type diffraction grating 20 without diffraction.

Subsequently, the luminous flux L2 from the transmission type diffraction grating 20 is diffracted by the reflection type diffraction grating 22 and then is again transmitted through the transmission type diffraction grating 20 without diffraction.

On the other hand, the luminous flux L3 from the transmission type diffraction grating 20 is diffracted by the reflection type diffraction grating 22 and is again diffracted by the transmission type diffraction grating 20.

Thus obtained two luminous fluxes L2, L3 are again superposed on each other by the transmission type diffraction grating 20, so as to interfere with each other.

The detecting means 16 comprises a photodetector (PD) or the like, for example, photoelectrically detects the intensity of the interference light L4, and outputs an interference signal to the signal processing means 18 at a later stage.

The signal processing means 18 comprises a personal computer or the like, for example, measures the intensity change and interference period of the interference signal obtained by the detecting means 16, and determines the dislocation of the moving object 24 from the intensity change and interference period of the interference signal.

Namely, the signal processing means 18 determines the phase change of light from the phase change of the electric signal obtained by the detecting means 16, and determines the dislocation of the moving object 24 from the phase change of light.

For example, of the interference signal obtained by the detecting means 16, the intensity change of the DC signal is interpolated with a line while inserting a scale, based on an AC signal which is an interference component, with a predetermined interval of period on the order of wavelength, for example, and the dislocation of the moving object 24 is measured from the scale as the interference period and the DC-like information as the intensity change of the interference signal.

For measuring the dislocating direction of the moving object 24 as well, the detecting means 16 in accordance with this embodiment comprises two photodetectors (PD) disposed with predetermined distances therebetween in three directions of XYZ, for example, and the like.

As a consequence, the two electric signals from the respective photodetectors have phases shifted from each other by a certain period in the rangefinder 10 in accordance with this embodiment, whereby the signal processing means 18 at the later stage can determine the dislocating direction of the moving object 24 by comparing the two electric signals with each other and detecting whether the phase of one of them is advanced or retarded from the phase of the other.

The rangefinder 10 in accordance with this embodiment is schematically constructed as in the foregoing. Its operations will be explained in the following.

First, one luminous flux L1 from the light source 12 is split into two luminous fluxes L2, L3 having directions different from each other by the transmission type diffraction grating 20 acting as one part of the interfering means 14, these luminous fluxes L2, L3 are caused to impinge on the reflection type diffraction grating 22 acting as the other part of the interfering means 14, and the respective reflected light beams L2, L3 are again superposed on each other by the transmission type diffraction grating 20 so as to interfere with each other.

For example, the luminous flux L1 from the light source 12 is made incident on the transmission type diffraction grating 20, one luminous flux L2 is diffracted by and emitted from the transmission type diffraction grating 20, and the other luminous flux L3 is transmitted therethrough without diffraction so as to be made incident on the reflection type diffraction grating 22.

The luminous fluxes L2, L3 incident on the reflection type diffraction grating 22 are diffracted by and emitted from the reflection type diffraction grating 22, and are made incident on the transmission type diffraction grating 20 again.

In the transmission type diffraction grating 20, the luminous flux L3 is diffracted, the luminous flux L2 is transmitted therethrough without diffraction, and these two luminous fluxes L2, L3 are superposed on each other so as to interfere with each other. Thus obtained interference light L4 is made incident on the detecting means 16 at a later stage.

Thus, the interfering means 14 turns one luminous flux L1 from the light source 12 into two luminous fluxes L2, L3 having altered directions, and the two luminous fluxes L2, L3 are again superposed on each other so as to interfere with each other. Thus obtained interference light L4 is photoelectrically detected by the detecting means 16.

When the reflection type diffraction grating 22 moves in a direction orthogonal to the optical axis, i.e., Y or Z direction in the drawing, as the moving object 24 moves, the intensity of the interference signal from the detecting means 16 changes according to the moving distance.

Here, the conventional rangefinders based on light detect the AC signal of the interference signal, and detect lateral shift components of the moving object, i.e., dislocation components in Y and Z directions, from the change in interference wavelength.

However, it has been impossible for the rangefinders having the conventional configuration mentioned above to generate interference waves with a distance not longer than 1/2 of the wavelength of the light from the light source, and measure the distance not longer than the wavelength.

In particular, it has been quite difficult to measure with a high accuracy the dislocation of a minutely movable stage of an atomic force microscope or near-field optical microscope which moves by a minute distance, and the like.

Therefore, in the rangefinder 10 in accordance with this embodiment, the interfering means 14 turns one luminous flux L1 from the light source 12 into two luminous fluxes L2, L3 having altered directions, and the two luminous fluxes L2, L3 are superposed on each other so as to interfere with each other. Thus obtained interference light L4 is photoelectrically detected by the detecting means 16.

Then, the signal processing means 18 measures the intensity change and interference period of the interference signal obtained by the detecting means 16, and the dislocation component of lateral shift direction of the moving object 24 is determined from the intensity change and interference period of the interference signal.

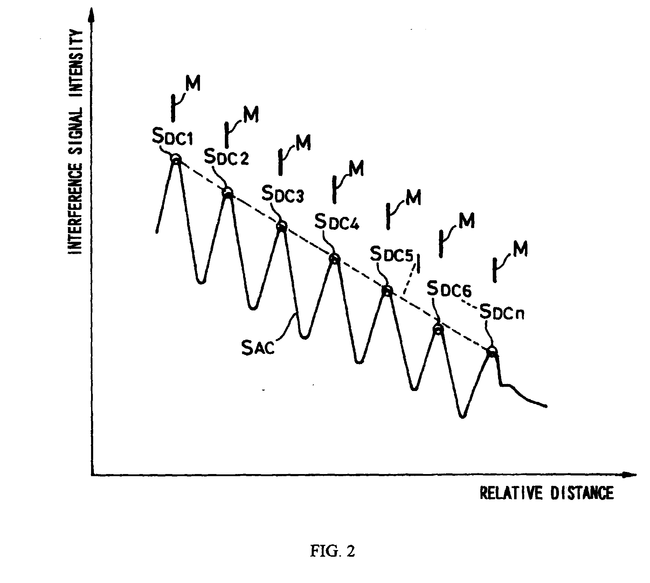

A more specific method of processing an interference signal in the signal processing means 18 in accordance with this embodiment will now be explained with reference to Fig. 2.

Namely, as shown in Fig. 2, the signal processing means 18 in accordance with this embodiment plots measured values S_{DC1} to S_{DCn} of the DC signal in the interference signal obtained by the detecting means 16.

Subsequently, using a measured value S_{AC} of the AC signal, which is an interference component, scales M as the interference period are inserted with a predetermined interval of period, for example, on the order of the wavelength.

Then, the gaps between the individual measured values S_{DC1} to S_{DCn} of the DC signal are interpolated with a line 1, whereby the intensity change of the interference signal can be obtained like DC.

The signal processing means 18 in accordance with this embodiment determines the dislocation of the moving object 24 from the scales M as the interference period and the line 1 as the intensity change of the DC-like interference signal.

As a result, there is no restriction concerning the wavelength of light employed for dislocation measurement in this embodiment, and the period of interference signal is determined by the intervals of grooves in the diffraction gratings 20, 24, whereby even the amount of dislocation not longer than the wavelength of light can be determined with a high accuracy from the number of scales M and the line 1 as the DC-like interference signal intensity.

The conventionally configured rangefinders have been able to count only changes in the number of scales M. In this case, it has been impossible to measure dislocations not greater than the interval of scales M, i.e., not greater than the wavelength of light.

Therefore, the signal processing means 18 in accordance with this embodiment determines not only the changes in the number of scales M, but also the dislocations not greater than the scales M by dividing the line 1 between the scales M.

Namely, in the signal processing means 18 in accordance with this embodiment, while the dislocation is measured by the integer portion of an interference period unit, a minute amount of dislocation which cannot be expressed by the interference period unit alone, i.e., so-called the decimal amount of dislocation, is determined from the line 1. Hence, even a much minuter amount of dislocation can be determined with a high accuracy as compared with the case where the dislocation is simply determined from the interference period.

Also, since the scales M and the like are inserted with a predetermined period of interval on the order of the wavelength, the amount of dislocation can accurately be corrected in this embodiment. Namely, the linear interpolation can be carried out more accurately. As a consequence, the amount of dislocation of the moving object 24 can be determined with a higher accuracy as compared with the case where there are no such contrivances.

In this embodiment, since the measurement of the dislocation of the moving object 24 is not restricted by the wavelength of light employed for dislocation measurement of the light source 12 or the like, light-emitting diodes (LED) and the like, which are less expensive than the laser diodes (LD) used as typical monochromatic light sources, can be employed as the light source 12. As a consequence, the apparatus can be made at a lower cost.

When reflecting mirrors such as scanning mirror and fixed minor are employed as in the conventionally configured rangefinders, only a dislocation component of one direction along the direction in which light advances can be measured basically.

Namely, one rangefinder can measure only a dislocation component of one direction. For measuring the dislocation of the minutely movable stage and the like for which three axes are typically combined to each other, one rangefinder is necessary for each dislocating direction of the moving object 24. As a consequence, the apparatus as a whole increases its dimensions, thereby becoming expensive.

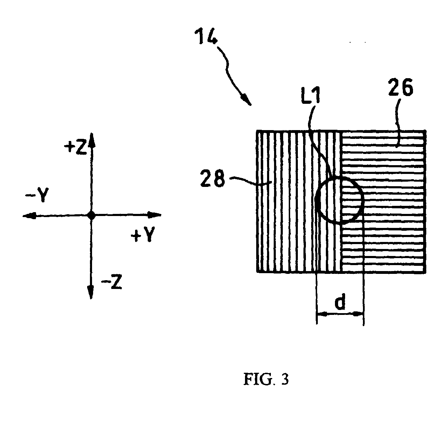

Therefore, in the interfering means 14 in accordance with this embodiment, as shown in Fig. 3, one grating surface of each of the diffraction gratings 20, 22 is split into two grating faces 26, 28, and respective grooves of the grating faces 26, 28 are engraved in the individual dislocating directions of the moving object, i.e., Y and Z directions in this drawing.

Namely, the respective grating faces 26, 28 having lines engraved in the individual dislocating directions of the moving object 24 are arranged adjacent each other.

Also, as shown in Fig. 3, one light beam L1 is emitted from the light source such that its beam diameter d extends across the grating faces 26, 28.

As a result, one rangefinder 10 in accordance with this embodiment can measure dislocation components in two engraved line directions parallel to the grating surface of the diffraction grating, i.e., dislocation components in Y and Z directions orthogonal to each other in Fig. 3.

Also, in the rangefinder 10 in accordance with this embodiment, the moving object 24 is made movable in X direction as well.

Here, the signal processing means 18 can measure the intensity change and interference period of the interference signal obtained by the detecting means 16, and can also measure the dislocation component in the optical axis direction of the diffraction gratings 20, 22, i.e., X direction in Fig. 1, from the intensity change and interference period of the interference signal.

As a consequence, in this embodiment, one rangefinder 10 can carry out simultaneous measurement of three axes as well.

Therefore, as compared with the case where a rangefinder is provided for each dislocating direction of the moving object 24, the configuration of the apparatus can be simplified. Consequently, smaller dimensions and lower cost can be attained.

Also, in the rangefinder 10 in accordance with this embodiment, two photodetectors (PD) are provided as the detecting means 16 such that their electric signals have phases shifted from each other by a certain period, whereby the signal processing means 18 can determine the moving direction of the moving object 24 by detecting whether the phase of one electric signal is advanced or retarded from the phase of the other.

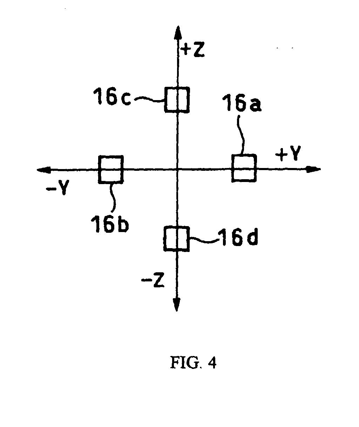

Namely, for measuring the dislocating direction of the moving object 24 as well, the detecting means 16 in accordance with this embodiment comprises two photodetectors (PD) 16a, 16b disposed with a certain distance therebetween in Y direction as shown in Fig. 4, for example.

Therefore, in this embodiment, two electric signals from their corresponding two photodetectors 16a, 16b have respective phases shifted from each other by a certain period.

Consequently, the signal processing means 18 at a later stage can determine the moving direction of the moving object 24, i.e., whether it has moved in +Y direction or -Y direction, by comparing these two electric signals from their corresponding two photodetectors 16a, 16b with each other and detecting whether the phase of one electric signal is advanced or retarded from the phase of the other.

Also, in Fig. 4, two photodetectors (PD) 16c, 16d are disposed with a certain distance therebetween in Z direction.

Therefore, in this embodiment, two electric signals from their corresponding two photodetectors 16c, 16d have respective phases shifted from each other by a certain period.

Consequently, the signal processing means 18 at a later stage can determine the moving direction of the moving object 24, i.e., whether it has moved in +Z direction or -Z direction, by comparing these two electric signals from their corresponding two photodetectors 16c, 16d with each other and detecting whether the phase of one electric signal is advanced or retarded from the phase of the other.

In the rangefinder 10 in accordance with this embodiment, as in the foregoing, the transmission type diffraction grating 20 and reflection type diffraction grating 22 turn one light beam L1 from the light source 12 into two luminous fluxes L2, L3 having altered directions, and the two luminous fluxes L2, L3 are again superposed on each other by the transmission type diffraction grating 20 so as to interfere with each other.

Thus obtained interference light L4 is photoelectrically detected by the detecting means 16, the intensity change and interference period of the interference signal are measured by the signal processing means 18, and the dislocation of the moving object 24 is determined from the intensity change and interference period.

Namely, since the phase change of light is directly determined from the phase change of electric signal by the signal processing means 18 without the aid of conventional interference fringes themselves, the rangefinder 10 in accordance with this embodiment has no restriction concerning the wavelength of light employed for dislocation measurement, and the period of interference signal is determined by the intervals of grooves of the diffraction gratings 20, 22, whereby a minuter amount of dislocation can be determined if the intervals of grooves are made minuter

Therefore, the rangefinder 10 in accordance with this embodiment can measure with a high accuracy a minute distance not longer than the wavelength of light, which has been quite difficult with the conventional rangefinders based on the wavelength of light.

Also, in this embodiment, since there is no restriction concerning the wavelength of light from the light source, light-emitting diodes (LED) and the like, which are less expensive than laser diodes (LD) and the like used as a typical monochromatic light source, for example, can be employed as well. As a consequence, the rangefinder 10 can attain a lower cost.

In this embodiment, on the other hand, one grating surface of the diffraction gratings 20, 22 and the like is split into two grating faces 26, 28, the respective grooves of the grating faces 26, 28 are engraved in individual dislocating directions of the moving object 24, and one light beam L1 from the light source 12 is emitted such that its beam diameter d extends across the grating faces 26, 28. As a consequence, one rangefinder can carry out simultaneous measurement of three axial directions, which has been quite difficult with the conventionally configured rangefinder using reflecting mirrors such as scanning mirror and fixed mirror, whereby the configuration can be simplified.

Though the foregoing configuration relates to an example in which the object to be measured and the reference object are provided with the reflection type diffraction grating 22 and the transmission type diffraction grating 20, respectively, the rangefinder of the present invention is not restricted thereto, and the object to be measured and the reference object may be provided with the transmission type diffraction grating 20 and the reflection type diffraction grating 22, respectively.

Also, the foregoing configuration relates to an example in which the luminous flux L1 from the light source 12 is turned into the luminous flux L2 diffracted by the transmission type diffraction grating 20, diffracted by the reflection type diffraction grating 22, and then transmitted through the transmission type diffraction grating 20 without diffraction; and the luminous flux L3 transmitted through the transmission type diffraction grating 20 without diffraction, diffracted by the reflection type diffraction grating 22, and then diffracted by the transmission type diffraction grating 20.

However, the rangefinder of the present invention should not be restricted thereto. As long as two luminous fluxes having directions different from each other are obtained from the same light source 12, the luminous flux L2 may be light transmitted through the transmission type diffraction grating 20 without diffraction, diffracted by the reflection type diffraction grating 22, and then diffracted by the transmission type diffraction grating 20.

Also, the luminous flux L3 may be light diffracted by the transmission type diffraction grating 20, diffracted by the reflection type diffraction grating 22, and then transmitted through the transmission type diffraction grating 20 without diffraction.

The rangefinder 10 in accordance with this embodiment can measure changes in relative distance between the moving object 24 other than the minutely movable stage and a stationary object as a matter of course, and is suitably employed, in particular, for measuring the dislocation of the minutely movable stage in an atomic force microscope or near-field optical microscope or the like, for example, for which highly accurate measurement of a minute amount of dislocation is required.

### Second Embodiment

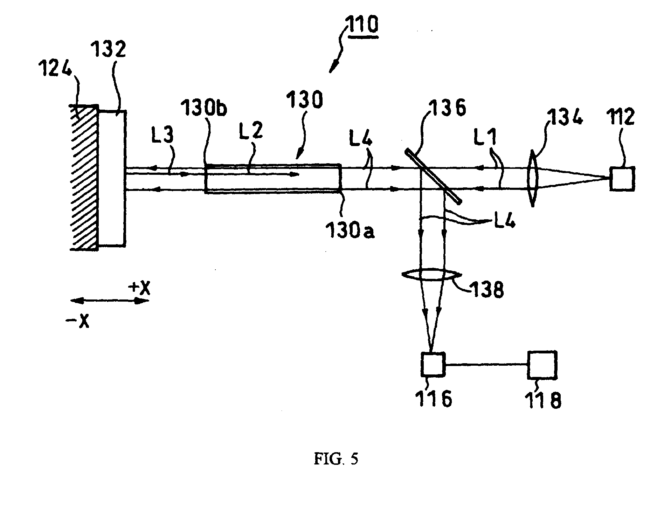

Fig. 5 shows a schematic configuration of the rangefinder in accordance with a second embodiment of the present invention. Here, parts corresponding to those in Fig. 1 will be referred to with numerals adding 100 to their corresponding numerals, without repeating their overlapping explanations.

The rangefinder 110 shown in this drawing includes a light source 112, an optical fiber bundle 130 as a reference object and light-transmitting and receiving means, a reflecting plate 132 as a reflecting object, detecting means 116, and signal processing means 118.

Here, the light source 112 comprises, for example, a laser diode (LD) or a light-emitting diode (LED) which is less expensive than the LD.

The light source 112 emits a luminous flux L1 having a predetermined beam diameter.

The optical fiber bundle 130 sends out the luminous flux L1 from the light source 112 to the reflecting plate 132.

The optical fiber bundle 130 receives reflected light L3 from the reflecting plate 132.

The reflecting plate 132 is disposed, for example, at a side wall of a moving object 124 such as a minutely movable stage, and is movable, for example, in the direction of X in the drawing as the moving object 124 moves.

Also, the reflected light L3 from the reflecting plate 132 obtained by the optical fiber bundle 130 and the reflected light L2 at the exit end 130b of the optical fiber bundle 130 are superposed on each other so as to interfere with each other. Thus, interference light L4 is obtained.

The detecting means 116 comprises two photodetectors (PD) or the like disposed with a certain distance therebetween in X direction, for example.

The detecting means 116 photoelectrically detects the intensity of the interference light L4 and outputs thus detected signal to the signal processing means 118 at a later stage.

The signal processing means 118 comprises a personal computer or the like, for example, measures the intensity change and interference period of the interference signal obtained by the detecting means 116, and determines the dislocation of the moving object 124 from the intensity change and interference period of the interference signal.

Namely, the signal processing means 118 determines the phase change of light from the phase change of the electric signal obtained by the detecting means 116, and then determines the dislocation of the moving object 124.

For example, of the interference signal obtained by the detecting means 116, the intensity change of the DC signal is interpolated with a line while inserting a scale, based on an AC signal which is an interference component, with a predetermined interval of period on the order of wavelength, for example, and the dislocation of the moving object 124 is measured from the scale as the interference period and the DC-like information as the intensity change of the interference signal.

The detecting means 116 in accordance with this embodiment comprises two photodetectors disposed with a certain distance therebetween in X direction, whereby respective electric signals from the two photodetectors have phases shifted from each other by a certain period.

As a consequence, in the rangefinder 110 in accordance with this embodiment, the signal processing means 118 can determine the dislocating direction of the moving object 124 by comparing the two electric signals from the photodetectors and detecting whether the phase of one electric signal is advanced or retarded from the phase of the other.

The rangefinder 110 in accordance with this embodiment is schematically configured as in the foregoing. Its operations will be explained in the following.

First, the light L1 from the light source 112 is turned into a parallel luminous flux by a lens 134, which is transmitted through a beam splitter 136 and then is made incident on the entrance end 130a of the optical fiber bundle 130.

The luminous flux L3 transmitted through the optical fiber bundle 130 and then emitted from the exit end 130b thereof is reflected by the reflecting plate 132 and is again received by the exit end 130b of the optical fiber bundle 130.

At the exit end 130b of the optical fiber bundle 130, the luminous flux L3 from the reflecting plate 132 and the reflected light L2 from the exit end 130b of the optical fiber bundle 130 are superposed on each other so as to interfere with each other.

Thus obtained interference light L4 is emitted from the entrance end 130a of the optical fiber bundle 130, reflected by the beam splitter 136, and further collected by a lens 138, so as to be made incident on the detecting means 116.

The detecting means 116 photoelectrically detects the interference light L4, and outputs thus detected interference signal to the signal processing means 118, which will be explained later.

Here, depending on the position of the reflecting plate 132 in X direction, the amount of attenuation of the reflected luminous flux L3 at the optical fiber bundle 130 varies.

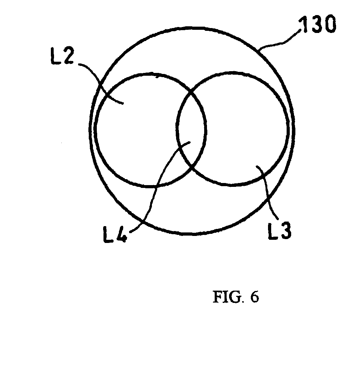

Also, depending on the position of the reflecting plate 132 in X direction, the size of the overlap between the reflected light L2 and reflected light L3 in the optical fiber bundle 130, such as that shown in Fig. 6, i.e., the size of interference light L4, varies, whereby the quantity of interference light L4 received at the detecting means 116 varies as well.

The relationship between the distance of the reflecting plate 132 from the exit end 130b of the optical fiber bundle 130 and the interference signal intensity outputted from the detecting means 116 is similar to the relationship between the relative distance of the moving object 24 and interference signal intensity shown in Fig. 2.

Consequently, as the interference signal obtained by the detecting means 116 is subjected to signal processing similar to that in the first embodiment (see Fig. 2), the signal processing means in accordance with this embodiment can even carry out measurement of a minute distance not longer than the wavelength of light, which has been quite difficult with conventional rangefinders based on the wavelength of light.

Though the foregoing configuration relates to an example using the optical fiber bundle 130 as light-transmitting and receiving means, the rangefinder of the present invention is not restricted thereto. An optical component such as concave lens may be provided in place of the optical fiber bundle, so as to measure changes in relative distance between the reflecting plate 132 and the concave lens.

The rangefinder 110 in accordance with this embodiment can measure changes in relative distance of the moving object 124 other than the above-mentioned stage as a matter of course, and is suitably employed, in particular, for measuring the dislocation of the minutely movable stage in an atomic force microscope or near-field optical microscope or the like, for example, for which highly accurate measurement of a minute amount of dislocation is required.

## Claims

1. A rangefinder for measuring a dislocation of an object to be measured with reference to a reference object,
said rangefinder comprising:
a light source for emitting a luminous flux having a predetermined beam diameter;
interfering means which is an object having an optical axis substantially perpendicular to a direction in which said object to be measured can be dislocated, said interfering means having a transmission type diffraction grating as one object for splitting the luminous flux from said light source into two diffraction luminous fluxes having respective directions different from each other, said two diffraction luminous fluxes being caused to impinge on a reflection type diffraction grating as the other object, respective reflection luminous fluxes thereof being superposed on each other again by said transmission type diffraction grating so as to interfere with each other;
detecting means for photoelectrically detecting interference light obtained by said interfering means; and
signal processing means for measuring an intensity change and interference period of an interference signal obtained by said detecting means, and determining the dislocation of said object to be measured with reference to said reference object from the intensity change and interference period of said interference signal.

2. A rangefinder according to claim 1, wherein, for measuring the intensity change and interference period of said interference signal, said signal processing means interpolates with a line the intensity change of a DC signal of the interference signal obtained by said detecting means while inserting a scale based on an AC signal which is an interference component and determines the dislocation of said object to be measured with reference to said reference object according to said scale and said DC-like information.

3. A rangefinder according to claim 1, wherein said diffraction grating has one grating surface divided into a plurality of grating faces with lines engraved in respective dislocating directions of said object to be measured,
said rangefinder emitting one light beam from said light source such that the beam diameter thereof extends across said grating faces, and measuring respective dislocation components in said line directions with reference to said reference object.

4. A rangefinder according to claim 1, wherein said object to be measured is also movable in the optical axis direction thereof,
said signal processing means measuring the intensity change and interference period of said interference signal obtained by said detecting means and also determining a dislocation component of said object to be measured in the optical axis direction from said intensity change and interference period of said interference signal.

5. A rangefinder for measuring a dislocation of an object to be measured with reference to a reference object,
said rangefinder comprising:
a light source for emitting a luminous flux having a predetermined beam diameter;
light-transmitting and receiving means for sending out light from said light source from an exit end of said one object to a reflecting object as said other object, receiving the light reflected by said reflecting object, and superposing said light reflected by said reflecting object and light reflected by the exit end of said reflecting object onto each other so as to cause interference therebetween;
detecting means for photoelectrically detecting an intensity signal of interference light obtained by said light-transmitting and receiving means; and
signal processing means for measuring an intensity change and interference period of an interference signal obtained by said detecting means, and determining the dislocation of said object to be measured with reference to said reference object from the intensity change and interference period of said interference signal.

6. A rangefinder according to claim 5, wherein, for measuring the intensity change and interference period of said interference signal, said signal processing means interpolates with a line the intensity change of a DC signal of the interference signal obtained by said detecting means while inserting a scale based on an AC signal which is an interference component and determines the dislocation of said object to be measured with reference to said reference object according to said scale and said DC-like information.

7. A rangefinder according to claim 1, wherein said light source emits coherent monochromatic light.
